(19) **Europäisches Patentamt / European Patent Office / Office européen des brevets**

(11) **EP 3 418 029 A1**

(12) **EUROPEAN PATENT APPLICATION**

(43) Date of publication:
26.12.2018 Bulletin 2018/52

(51) Int Cl.:
*B29C 49/42* (2006.01)  *B29C 49/58* (2006.01)

(21) Application number: **18188181.4**

(22) Date of filing: **11.02.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.02.2014 US 201461938313 P**

(62) Document number(s) of the earlier application(s) in accordance with Art. 76 EPC:
**15708741.2 / 3 105 032**

(71) Applicant: **Norgren AG**
**8362 Balterswil (CH)**

(72) Inventor: **RYMANN, Othmar**
**8362 Balterswil (CH)**

(74) Representative: **Gray, James**
**Withers & Rogers LLP**
**4 More London Riverside**
**London SE1 2AU (GB)**

Remarks:
This application was filed on 09-08-2018 as a divisional application to the application mentioned under INID code 62.

(54) **BLOW VALVE**

(57) A valve (200) for a blow molding machine (100) and a method for actuating the same are provided. The includes a housing (202) having an inlet (204) and an outlet (206), a piston (208) movable inside the housing (202), and a pressure compensation chamber (218) positioned between the pressure compensation end (220) of the piston (208) and the housing (202). The piston (208) includes a pressure compensation end (220), a valve seat end (222), and a pressure compensation bore (210). The pressure compensation chamber (218) is in fluid communication with the inlet (204) via the valve seat end (222) of the piston (208) via the pressure compensation bore (210). The piston (208) is configured to actuate independently of an inlet fluid pressure (236).

FIG. 1

EP 3 418 029 A1

**Description**

**TECHNICAL FIELD**

The present Application relates to valves, and more particularly, to a blow valve.

**BACKGROUND OF THE APPLICATION**

Blow-molding is a process for molding a preform part into a desired product. One specific type of blow-molding is stretch blow-molding. Stretch blow-molding can be used in a wide variety of applications; however, one of the most widely used applications is in the production of Polyethylene terephthalate (PET) products, such as drinking bottles.

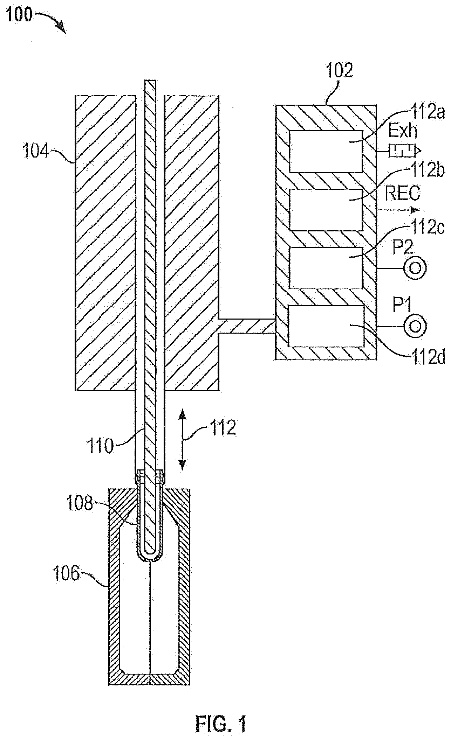

For example, **FIG. 1** depicts a simplified stretch blow molding machine 100. Example stretch blow-molding machine 100 includes a valve block 102, a blow cylinder 104, a blow mold 106, a preform 108, and a stretch rod 110. Blow valve block 102 includes four blow valves, 112a, 112b, 112c, and 112d that are operable to open or close a fluid connection between blow cylinder 104 and a fluid port. For example, blow valve 112a may be fluidly connected to an exhaust, blow valve 112b may be fluidly connected to a fluid reclamation reservoir, blow valve 112c may be fluidly connected to a high pressure source P2, and blow valve 112d may be fluidly connected to a low pressure source PI. The example of blow valve block 102 is not intended to be limiting, however. In embodiments, blow valve block 102 may include any number of blow valves 112 connected to any number of fluid ports. Blow valve block 102 provides low-pressure and high-pressure fluid supplies to preform 108 via blow cylinder 104, and may also be used to reclaim gas, or to exhaust gas.

Blow cylinder 104 moves reciprocally between a retracted and extended position to come into contact with a preform 108 positioned below. In the retracted position, blow cylinder 106 is positioned to allow a gripper (not shown) to insert preform 108 into blow mold 106 or remove a finished product from blow mold 106.

In FIG. 1, blow cylinder 104 is in an extended position, providing a fluid connection between blow valve block 102 and a preform 108. In the extended position, blow cylinder 104 seats on a portion of preform 108 external to blow mold 106 to create a seal. A stretch rod 110 is extended into preform 108. Stretch rod 110 may be used to longitudinally expand preform 108 into mold cavity 106. Blow mold 106 includes a cavity that comprises the outer shape of the desired product.

Typically, the stretch blow-molding process includes applying a low-pressure fluid supply from blow valve block 102 along with stretch rod 110 during a pre-blow phase to stretch the preform 108 in a longitudinal direction and radially outward. The stretch blow-molding process next uses one or more high-pressure fluid supplies during a blowing phase to expand the portion of preform 108 into blow mold 106. The resulting product is generally hollow with an exterior shape conforming to the shape of mold cavity 106. The gas in the preform 108 is exhausted through blow valve block 102. In a variation of the stretch-blow molding process, the expanded preform 108 may be heated via mold 106 during the pre-blow and blowing phases. The stretch-blow molding process may further include a cold set stage during which cool air is flowed into preform 108 from a cooling valve and recovered by recovery valve. The cold set stage is then followed by an exhaust stage. The stretch blow-molding process is then repeated during each blow-molding cycle.

The blow valve 112 cycle time and or actuation time can add to the overall time to fabricate a bottle or product via the stretch blow-molding process. It is therefore important to actuate blow valve 112 as quickly as possible.

Prior blow valve designs use a working fluid pressure to actuate the blow valve. Using a working fluid pressure to actuate a blow valve provides for blow valve actuation times that vary with working fluid pressure, however. In addition, using a working fluid pressure to actuate leads to asymmetric open and close cycle times. For example, it may take a prior valve 29 ms to open and 44 ms to close. Prior valves that use working fluid pressure to actuate have lower actuation accuracy, for example some prior valves offer an accuracy of ±2 ms. Using working fluid pressure to actuate can further negatively impact the repeatability of the performance of a valve.

Prior blow valve designs also have long stroke length, which can lead to slower actuation times.

Prior blow valve designs require a mechanical biasing member to retain the blow valve in a stable position. The biasing member provides an additional force that must be overcome to actuate the valve, however, which can further impact actuation time and accuracy.

There is a need in the art for a blow valve that is fast, efficient, accurate, providing repeatable results. The present embodiments described below overcome these and other problems and an advance in the art is achieved.

**SUMMARY OF THE APPLICATION**

A valve for a blow molding machine is provided according to an embodiment. The valve includes a housing having an inlet and an outlet. The valve further includes a piston movable inside the housing. The piston includes a pressure compensation end, a valve seat end, and a pressure compensation bore. The valve further includes a pressure compensation chamber. The pressure compensation chamber is positioned between the pressure compensation end of the piston and the housing. The pressure compensation chamber is in fluid communication with the inlet via the valve seat end of the piston via the pressure compensation bore. The piston is configured to actuate independently of an inlet fluid pressure.

A method for actuating a valve for a blow molding machine is provided. The method includes the step of providing a housing having an inlet, and an outlet. The method further includes the step of providing a piston movable inside the housing. The piston includes a pressure compensation end, a valve seat end, and a pressure compensation bore. The method further includes the step of providing pressure compensation between the inlet and a pressure compensation chamber via the pressure compensation bore, wherein the inlet is positioned proximate to the valve seat end of the piston, and the pressure compensation chamber is positioned between the pressure compensation end of the piston and the housing. The method further includes the step of actuating the piston independently of an inlet fluid pressure.

**ASPECTS**

In one embodiment of the valve, the piston further comprises an annular section. The valve further comprises an upper control chamber positioned between an upper end of the annular section and the housing, and a lower control chamber positioned between a lower end of the annular section and the housing. The upper control chamber and the lower control chamber are operable to actuate the piston independently of the inlet fluid pressure.

In one embodiment of the valve, the upper control chamber is pressurized independently of the lower control chamber.

In one embodiment of the valve, the valve further includes a valve seat configured to seat the piston when the valve is in a closed position, the valve seat having an inner valve seat diameter that is smaller than a piston diameter.

In one embodiment of the valve, the valve further includes a valve seat configured to seat the piston when the valve is in a closed position, the valve seat having an inner valve seat diameter, wherein a piston stroke is less than one-fourth of the inner valve seat diameter.

In one embodiment of the valve, the annular section has an annular diameter, the annular diameter sized to provide a control chamber force that is much larger than a seal friction force of the valve.

In one embodiment of the valve, the valve further includes a pilot valve, the pilot valve operable to independently control the pressure in each of the upper control chamber and the lower control chamber.

In one embodiment of the valve, the pilot valve is a 5/2 valve.

In one embodiment of the valve, the pilot valve is pressure-balanced.

In one embodiment of the valve, the pilot valve includes a slide having a slide diameter that is between 3.5 and 5 mm, and a slide stroke that is approximately 2 mm.

In one embodiment of the method, the piston includes an annular section, and the valve further includes an upper control chamber between an upper end of the annular section and the housing, and a lower control chamber between a lower end of the annular section and the housing.

In one embodiment of the method, actuating the piston independently of the inlet fluid pressure includes pressurizing the upper control chamber independently of the lower control chamber.

In one embodiment of the method, the method further includes the step of biasing the valve to remain closed when the valve is in a closed position.

In one embodiment of the method, biasing the valve to remain closed when the valve is in the closed position includes providing a valve seat configured to seat the piston when the valve is in a closed position, the valve seat having an inner valve seat diameter that is smaller than a piston diameter.

In one embodiment of the method, the valve includes a valve seat configured to seat the piston when the valve is in a closed position, and the method further includes the step of minimizing a piston stroke by sizing piston stroke to be less than one fourth of an inner valve seat diameter.

In one embodiment of the method, the annular section has an annular diameter, the annular diameter being sized to provide a control chamber force that is much larger than a seal friction force of the valve.

In one embodiment of the method, actuating the piston independently of the inlet fluid pressure further includes pressurizing the upper control chamber and the lower control chamber using a pilot valve.

In one embodiment of the method, pilot valve is a 5/2 valve.

In one embodiment of the method, the pilot valve is pressure-balanced.

In one embodiment of the method, the pilot valve includes a slide having a slide diameter that is between 3.5 and 5 mm, and a slide stroke that is approximately 2 mm.

**BRIEF DESCRIPTION OF THE DRAWINGS**

FIG. 1 depicts a view of blow molding machine 100, in accordance with an embodiment.
FIG. 2 depicts a view of blow valve 112, in accordance with an embodiment.
FIG. 3 depicts a view of blow valve 112, in accordance with an embodiment.
FIG. 4 depicts a view of blow valve 112, in accordance with an embodiment.

## DETAILED DESCRIPTION OF THE APPLICATION

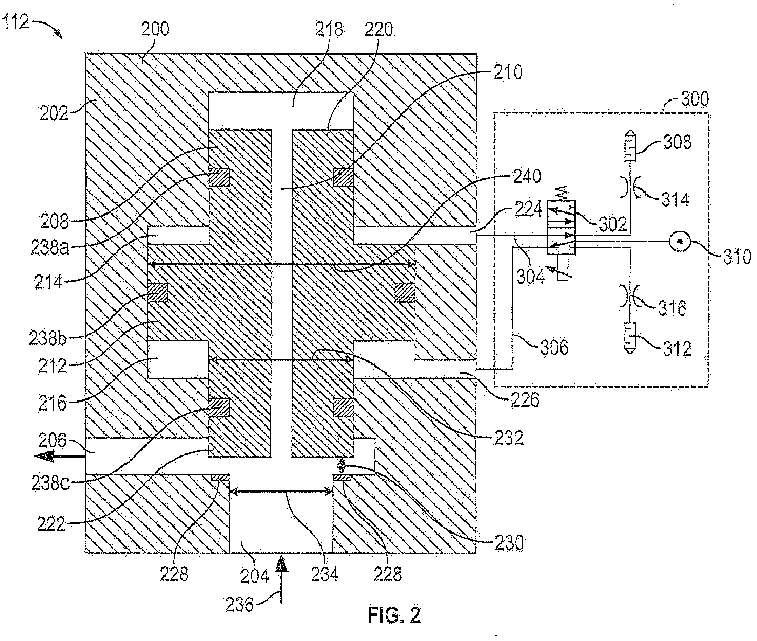

FIG. 2-4 and the following description depict specific examples to teach those skilled in the art how to make and use the best mode of the Application. For the purpose of teaching inventive principles, some conventional aspects have been simplified or omitted. Those skilled in the art will appreciate variations from these examples that fall within the scope of the Application. Those skilled in the art will appreciate that the features described below may be combined in various ways to form multiple variations of the Application. As a result, the Application is not limited to the specific examples described below, but only by the claims and their equivalents.

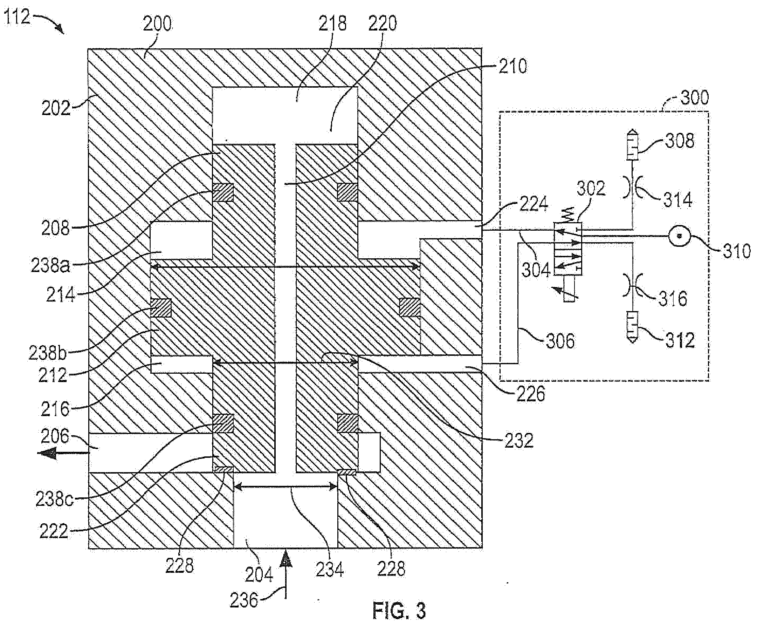

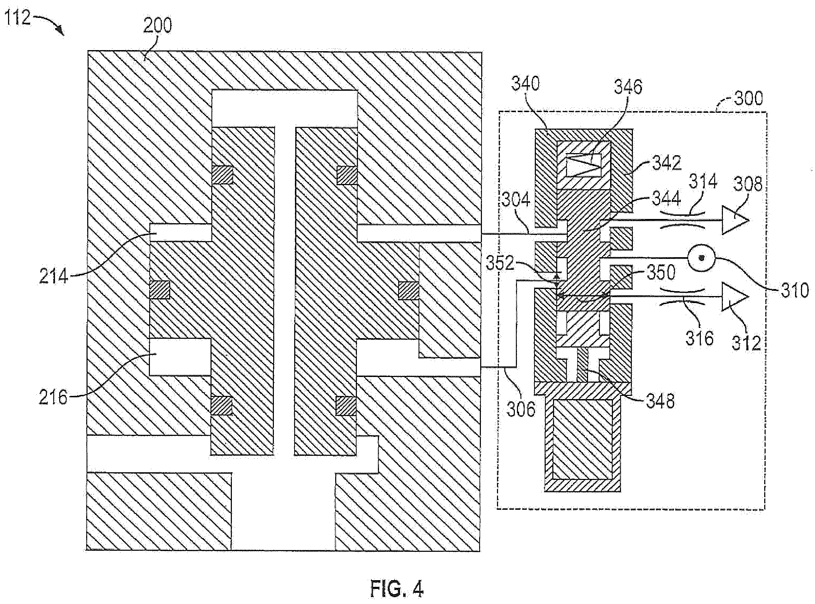

**FIGs. 2, 3, and 4** depict details of blow valve 112, in accordance with an embodiment. Blow valve 112 may include main valve 200 and pilot valve system 300. Blow valve 112 is operable to open and close a passageway on main valve 200 between an inlet 204 and an outlet 206. In FIGs. 2 and 4, blow valve 112 is depicted in an open position, and in FIG. 3 blow valve 112 is in a closed position.

Main valve 200 includes a housing 202 with a movable piston 208 contained therein. Housing 202 includes inlet 204 and outlet 206. In the interior space of housing 220, within which piston 208 reciprocates, housing 202 includes a valve seat 228. Valve seat 228 is a surface upon which piston 208 may be seated to interrupt the flow of fluid between inlet 204 and outlet 206, thereby closing main valve 200.

Piston 208 is movable over a piston stroke 230 inside housing 202 to open and close a passageway between inlet 204 and outlet 206. Piston 208 includes a pressure compensation end 220 and a valve seat end 222. When closed, valve seat end 222 of piston 208 comes to rest on valve seat 228. Main valve 200 is open when piston 208 is in any position unseated from valve seat 228. Main valve 200 is fully open when piston 208 is positioned at the top of piston stroke 230.

In the embodiment of main valve 200, piston 208 is cylindrical and valve seat 228 is circular in shape. This is not intended to be limiting, however, as this Application anticipates embodiments of piston 208 that are not circular in cross section along a long axis of piston 208. For example, piston 208 and valve seat 228 may include an oval cross section, a square cross section, or any other cross section commonly known to those of skill in the art.

Piston 208 further includes a pressure compensation bore 210. A pressure compensation chamber 218 is formed from the space between the interior of housing 202 and pressure compensation end 220 of piston 208. Pressure compensation bore 210 fluidly connects valve seat end 222 to pressure compensation end 220 of piston 208, thereby providing a fluid connection between inlet 204 and pressure compensation chamber 218. In embodiments, an inlet fluid pressure 236 applied at inlet 204, represented by an arrow in FIG. 2 , provides a force on each of the pressure compensation end 220 and the valve seat end 222 of piston 108. This is not intended to be limiting, however. In embodiments, fluid may be venting from outlet 206 towards inlet 204, as when blow molding machine 100 is exhausting or reclaiming fluid.

In the embodiment of main valve 200, the surface area of the pressure compensation end 220 is the same as the surface area of the valve seat end 222, which is equal to a piston diameter 232. Therefore, when main valve 200 is in an open position, the force applied by inlet fluid pressure 236 to the valve seat end 222 of piston 208 is equal to the force applied by inlet fluid pressure 236 to the pressure compensation end 220 of piston 208, as may be seen in FIG. 3. In this way, pressure compensation chamber 218 may provide pressure compensation to balance 100% of the force applied by inlet fluid pressure 236 at valve seat end 222 of piston 108. In this pressure-balanced environment, main valve 200 may be actuated independently of an inlet fluid pressure 236 supplied during the blow molding process, allowing for fast actuation times and accurate, repeatable results. The pressure compensation of main valve 200 in the open position is the same regardless of whether the blow valve machine 100 is in a low pressure, high pressure, exhaust, or reclaim cycle.

In further embodiments, the surface area of the pressure compensation end 220 and the valve seat end 222 of piston 208 may include different surface areas, however, providing a pressure compensation between the two ends that is less than or greater than 100%.

In embodiments, piston 208 may include an annular portion 212. Annular portion 212 extends from a central longitudinal portion of piston 208 inside housing 202. Annular portion 212 has an annular diameter 240 that is wider than piston diameter 232. The space between an upper end of annular portion 212 and housing 202 defines an upper control chamber 214, and the space between a lower end of annular portion 212 and housing 202 defines a lower control chamber 216. Pressurized fluid may enter or exit upper control chamber 214 via an upper control port 224, and pressurized fluid may enter or exit lower control chamber 216 via lower control port 226.

Upper control chamber 214 and lower control chamber 216 may be used to pneumatically actuate main valve 200. Because main valve 200 is pressure-balanced, the pneumatic actuation of main valve 200 via upper control chamber 214 and lower control chamber 216 is independent of inlet fluid pressure 236 provided at inlet 204. Therefore, for a given pattern of pilot pressures applied to upper control chamber 214 and lower control chamber 216, the time required to actuate or cycle main valve 200 through a piston stroke may be uniform regardless of inlet fluid pressure 236 at inlet 204. It therefore may not be necessary to overcome the force provided by inlet fluid pressure 236 to actuate main valve 200 through piston stroke 230. Without the need to overcome a potential force applied by inlet fluid pressure 236, it may be possible to actuate main valve 200 faster than prior blow valves. For example, it may take 7.5 ms cycle time to open or close main valve 200 by actuating piston 208 through piston stroke 230. This represents an improvement over the asymmetric 29 ms to 44 ms cycle times required by prior inlet-pressure dependent blow valves. Main valve 200 furthermore provides improved accuracy of ±0.5 ms actuation time error over the ±2 ms error provided by prior valves.

In further embodiments, fluid may be provided to upper control chamber 214 and lower control chamber 216 independently of one another. For example, fluid may be provided to upper control chamber 214 and lower control chamber 215 from independent pressurized fluid sources, or fluid may be exhausted from upper control chamber 214 or lower control chamber 215 using independently controlled flow restrictors.

The example of actuating main valve 200 pneumatically is not intended to be limiting, however. In embodiments, main valve 200 may be actuated via a solenoid, or any other method commonly known to those of skill in the art.

In embodiments, main valve 200 may be biased to remain in a closed position once main valve 200 is closed. For example, in FIG. 2 main valve 200 is depicted in a closed position. Valve seat 228 is positioned inside housing 202 where valve seat end 222 of piston 208 and the area outside inner valve seat diameter 234 come together. Valve seat 228 is formed by a lip in the housing, positioned at least partially within the annular disk between the inner valve seat diameter 234 and the valve seat end 222 of piston 208. Valve seat end 222 has a diameter that is equal to piston diameter 232, and inner valve seat diameter 234 is formed to be smaller than piston diameter 232. When main valve 200 is closed so that valve seat end 222 is substantially seated on valve seat 228, the surface area of valve seat end 222 exposed to inlet fluid pressure 236 is less than the surface area of pressure compensation end 220 of piston 208 exposed to inlet fluid pressure 236. The upwards force provided by the inlet fluid pressure 236 on the valve seat end 222 of piston 108 when main valve 200 is closed is therefore less than the downwards pressure provided at the pressure compensation end 220, biasing main valve 200 in the closed position when main valve 200 is substantially closed. In embodiments, inner valve seat diameter 234 may be sized to provide 90% of the inlet pressurized fluid force of that provided at pressure compensation end 220.

Advantageously, piston 208 may therefore be moderately pressure offset when closed to retain main valve 200 in a close position. When piston 208 is more than 0.02mm unseated from valve seat 228, however, the pressures are equal and main valve 200 may be 100% pressure compensated again.

Once main valve 200 is no longer substantially closed and piston 208 is unseated from valve seat 228, however, the surface area at the valve seat end 222 exposed to the inlet pressure will be equal to the entire piston diameter 232 instead of just the more restrictive inner valve seat diameter 234. When main valve 200 is no longer closed, it will therefore cease to be pressure biased in a closed position. In example embodiments, valves have been found to provide pressure biasing when piston 208 is between a seated position on valve seat 228 and 0.02 mm away from valve seat 228. From 0.02mm to the end of the full stroke length 230, however, the pressure compensation is 100%. Advantageously, this allows main valve 200 to perform fast and reliably while still offering a biased closed position.

In order to avoid interrupting fluid flow through a blow valve, it may be desirable to avoid restricting the flow cross section of the fluid between inlet 204 and outlet 206 of main valve 200. In the example of main valve 200, the surface area of the fluid flow entering main valve 200 through inlet 204 is provided by Equation 1 below, where the internal valve seat area is $A_{IVS}$, and $D_{IVS}$ is the inner valve seat diameter 234:

$$A_{IVS} = \frac{D_{IVS}^2 \times \pi}{4} \qquad\qquad \text{(Eq. 1)}$$

The surface area between valve seat 228 and valve seat end 222, through which inlet fluid must also pass when main valve 200 is open, forms a lateral collar as defined by Equation 2 below. In Equation 2, $A_{LC}$ is the area of the lateral collar, $D_{IVS}$ is the diameter of the inner valve seat, and L is piston stroke 230:

$$A_{LC} = D_{IVS} \times \pi \times L \qquad\qquad \text{(Eq. 2)}$$

Typically in prior blow valves, $A_{IVS}$ and $A_{LC}$ are designed to be equal, as required for a particular application. When $A_{IVS}$ and $A_{LC}$ are designed to include the same surface area, Equations 1 and 2 reduce so that inner valve seat diameter 234 is equal to four times stroke length 230, or $D_{IVS}$ = 4L.

In embodiments of main valve 200, it may be desirable to minimize piston stroke 230 $L$ to actuate main valve 200 more quickly. As may be seen in Equation 2, for equivalent values of lateral collar area $A_{LC}$, stroke length 230 L is inversely proportional to the inner valve seat diameter 234, $D_{IVS}$. Therefore, in embodiments lateral collar area $A_{LC}$ may be designed for a targeted fluid flow, but the area of the inner valve seat $A_{IVS}$ may not be designed to match. Instead, a minimal length of piston stroke 230 L may be selected. For example, piston stroke 230 L may be selected to be 3-4.5 mm in size. Once piston stroke 230 $L$ is selected, inner valve seat diameter 234 $D_{IVS}$ may be determined based upon Equation 2. When piston stroke 230 L is minimized, the area of inner valve seat $A_{IVS}$ will be larger than the area of lateral collar $A_{LC}$. Therefore, to minimize piston stroke 230, main valve 200 may include a piston stroke 230 L that is less than one-fourth of the inner valve seat diameter, $D_{IVS}$. Advantageously, reducing the stroke length 230 $L$ of main valve 200 provides for faster valve actuation. Shorter stroke length 230 L may also allow for a softer landing with lower impact velocity for piston 208, reducing potential damage to valve parts.

In embodiments, main valve 200 may further include seals 238a, 238b, and 238c. Seal 238a may be positioned between pressure compensation chamber 218 and upper control chamber 214. Seal 238b may be positioned between upper control chamber 214 and lower control chamber 216. Seal 238c may be positioned between lower control chamber 216 and outlet 206. Each of seals 238a, 238b, and 238c may be used to pneumatically seal the respective adjacent pressurized chambers.

Dynamic seal friction is a function of the forces from the pressures applied to the valve. Because main valve 200 is pressure-compensated when open, actuating piston 208 independently of inlet fluid pressure 236, the pressures that actuate main valve 200 are constant. Therefore, the seal friction is also constant regardless of inlet fluid pressure when using main valve 200, further providing repeatable performance and results.

In embodiments, annular portion 212 may include annular diameter 240 sized to provide a control chamber force that is much larger than the seal friction of the valve. A control chamber force may be any force that moves piston 208 up or down by pressurizing upper control chamber 214 or lower control chamber 216. Providing a control chamber force that is much greater than the seal friction may further provide for faster valve switching times.

In embodiments, blow valve 112 may further include a pilot valve. For example, FIG. 1 depicts pilot valve system 300. Pilot valve system 300 includes a pilot valve 302, fluid lines 304 and 306, exhaust silencers 308 and 312, restrictors 314 and 316, and pressurized fluid source 310. Pilot valve 302 may be in fluid communication with upper control port 224 via fluid line 304, and with lower control port 226 via fluid line 306.

In embodiments, pilot valve 302 may be spring biased into a first position (depicted in FIG. 3) in which pilot valve 302 provides pressurized fluid to upper control chamber 214 while exhausting fluid from lower control chamber 216, resulting in the closing of main valve 200. When pilot valve 302 is actuated, and the spring bias force is overcome, pressurized fluid may be provided to lower control chamber 216 and fluid may be exhausted from upper control chamber 214, resulting in the opening of main valve 200.

In the embodiment of FIG. 2, pilot valve 302 is a 5/2 solenoid valve. This is not intended to be limiting, however. In embodiments, pilot valve 302 may be any type of pilot valve known to those of skill in the art capable of providing fluid to and exhausting fluid from upper control chamber 214 and lower control chamber 216.

FIG. 4 depicts a further embodiment of pilot valve 304, a pilot valve 340. Pilot valve 340 includes a housing 342, a slide 344, a biasing element 346, and an actuating element 348. In the embodiment of FIG. 4, pilot valve 340 is a 5/2 valve.

Slide 344 is operable to reciprocate inside housing 342 to operate pilot valve 340. In a first position of pilot valve 340, slide 344 is positioned to allow fluid to flow from pressurized fluid source 310 to upper control chamber 214 via fluid line 304. In the first position, pilot valve 340 also vents fluid from lower control chamber 216 to exhaust 312 via fluid line 306. In a second position of pilot valve 340, slide 344 is positioned to allow fluid to flow from pressurized fluid source 310 to lower control chamber 216 via fluid line 306. In the second position, pilot valve 340 also vents fluid from upper control chamber 214 to exhaust 308 via fluid line 304.

In embodiments, slide 344 may be fabricated from metal. Advantageously, a metal slide 344 may alleviate the need for dynamic seals so that pilot valve 340 may operate with very little friction. This may provide for ease of operation of pilot valve 340, with repeatable operation and actuation times.

Pilot valve 340 may be electro-magnetically operated or pilot operated. Pilot valve 340 may be biased in a first position.

In embodiments, pilot 340 may include a pressure-balanced slide 344 to provide for fast and consistent valve actuation times.

In embodiments, slide 344 may provide a flow cross-section area that allows fluids to pass through pilot valve 340 largely unrestricted. The area of the flow cross section of pilot valve 340 $A_{PV}$ may be defined as the lateral collar defined in Equation 3:

$$A_{PV} = D_S \times \pi \times L_s. \qquad \text{(Eq. 3)}$$

Where $D_S$ is a spool valve diameter 350 and $L_S$ is a pilot valve stroke length 352. A desired flow cross section area $A_{PV}$ may be created using a number of combinations of spool valve diameter 350 $D_S$ and pilot valve stroke length 352 $L_S$. In embodiments, pilot valve stroke length 352 $L_S$ may be minimized by providing a relatively large spool valve diameter 350 $D_S$. For example, pilot valve stroke length 352 $L_S$ may be approximately 2 mm and spool valve diameter 350 $D_S$ may be approximately 12-14 mm. The shorter pilot valve stroke 352 $L_S$ may provide for faster switching times, which may advantageously result in faster actuation of main valve 200.

In embodiments, the openings in pilot valve 340 that lead to any of upper control chamber 214, lower control chamber 216, or exhausts 308 or 312 may be formed to be the narrowest point through which working fluid may pass in pilot valve 340. Advantageously, this may reduce scattering of working fluid through pilot valve 340. For example, the openings in pilot valve 340 that lead to any of upper control chamber 214, lower control chamber 216, or exhausts 308 or 312 may include a diameter in the range of 3.5 to 5 mm.

In embodiments, fluid exhausting from pilot valve 302 may be passed through a restrictor to further control the pressure in upper control chamber 214 and lower control chamber 216. For example, restrictor 314 may help control the flow of fluid exhausting from upper control chamber 214, and restrictor 316 may help control the flow of fluid exhausting from lower control chamber 216.

Pilot valve 302 may be operable to independently control the pressure in each of the upper control chamber 214 and the lower control chamber 216. Advantageously, this may allow more accurate control of main valve 200.

While blow valve 112, main valve 200 and pilot valve 302 are described above within the context of blow molding machine 100, this is not intended to be limiting. Those of skill in the art will recognize that blow mold valve 112, main valve 200, and/or pilot valve 302 may be used in any other fluid control application where speed, reliability, and repeatability are desired.

The detailed descriptions of the above embodiments are not exhaustive descriptions of all embodiments contemplated by the inventors to be within the scope of the Application. Indeed, persons skilled in the art will recognize that certain elements of the above-described embodiments may variously be combined or eliminated to create further embodiments, and such further embodiments fall within the scope and teachings of the Application. It will also be apparent to those of ordinary skill in the art that the above-described embodiments may be combined in whole or in part to create additional embodiments within the scope and teachings of the Application.

1. A valve (200) for a blow molding machine (100), the valve (200) comprising:

> a housing (202) having an inlet (204) and an outlet (206);
> a piston (208) movable inside the housing (202), the piston (208) including a pressure compensation end (222), a valve seat end (220), and a pressure compensation bore (210); and
> a pressure compensation chamber (218) positioned between the pressure compensation end (220) of the piston and the housing (202), the pressure compensation chamber (218) in fluid communication with the inlet (204) via the valve seat end (222) of the piston (208) via the pressure compensation bore (210),
> wherein the piston (208) is configured to actuate independently of an inlet fluid pressure (236),
> wherein the piston (208) further comprises an annular section (212), and the valve (200) further comprises:

>> an upper control chamber (214) positioned between an upper end of the annular section (212) and the housing (202); and
>> a lower control chamber (216) positioned between a lower end of the annular section (212) and the housing (202),

> wherein the upper control chamber (214) and the lower control chamber (216) are operable to actuate the piston (208) independently of the inlet fluid pressure (236),
> and wherein the valve further comprises a pilot valve (302, 340), the pilot valve operable to independently control the pressure in each of the upper control chamber (214) and the lower control chamber (216).

2. The valve (200) of clause 1, wherein the upper control chamber (214) is pressurized independently of the lower control chamber (216).

3. The valve (200) of clause 1, further comprising:

> a valve seat (228) configured to seat the piston (208) when the valve (200) is in a closed position, the valve seat (228) having an inner valve seat diameter (234) that is smaller than a piston diameter (232).

4. The valve (200) of clause 1, further comprising:

a valve seat (228) configured to seat the piston (208) when the valve (200) is in a closed position, the valve seat (228) having an inner valve seat diameter (234), wherein a piston stroke (230) is less than one-fourth of the inner valve seat diameter (234).

5. The valve (200) of clause 2, wherein the annular section (212) has an annular diameter (240), the annular diameter (240) sized to provide a control chamber force that is much larger than a seal friction force of the valve (200).

6. The valve (200) of clause 1, wherein the pilot valve is a 5/2 valve.

7. The valve (200) of clause 1, wherein the pilot valve is pressure-balanced.

8. The valve (200) of clause 6, wherein the pilot valve includes a slide (344) having a slide diameter (350) that is between 3.5 and 5 mm, and a slide stroke (352) that is approximately 2 mm.

9. A method for actuating a valve for a blow molding machine, the method including the steps of:

providing a housing having an inlet, and an outlet;
providing a piston movable inside the housing, the piston including a pressure compensation end, a valve seat end, and a pressure compensation bore, wherein the piston includes an annular section, and the valve further includes an upper control chamber between an upper end of the annular section and the housing, and a lower control chamber between a lower end of the annular section and the housing; and
providing pressure compensation between the inlet and a pressure compensation chamber via the pressure compensation bore, the inlet positioned proximate to the valve seat end of the piston, and the pressure compensation chamber positioned between the pressure compensation end of the piston and the housing;
actuating the piston independently of an inlet fluid pressure, wherein actuating the piston independently of the inlet fluid pressure includes pressurizing the upper control chamber independently of the lower control chamber.

10. The method of clause 9, further comprising the step of:

biasing the valve to remain closed when the valve is in a closed position.

11. The method of clause 10, wherein biasing the valve to remain closed when the valve is in the closed position includes providing a valve seat configured to seat the piston when the valve is in a closed position, the valve seat having an inner valve seat diameter that is smaller than a piston diameter.

12. The method of clause 9, wherein the valve includes a valve seat configured to seat the piston when the valve is in a closed position, and the method further comprises the step of:

minimizing a piston stroke by sizing piston stroke to be less than one fourth of an inner valve seat diameter.

13. The method of clause 9, wherein the annular section has an annular diameter, the annular diameter sized to provide a control chamber force that is much larger than a seal friction force of the valve.

14. The method of clause 9, wherein actuating the piston independently of the inlet fluid pressure further includes pressurizing the upper control chamber and the lower control chamber using a pilot valve.

15. The method of clause 14, wherein the pilot valve is a 5/2 valve.

16. The method of clause 14, wherein the pilot valve is pressure-balanced.

17. The method of clause 14, wherein the pilot valve includes a slide having a slide diameter that is between 3.5 and 5 mm, and a slide stroke that is approximately 2 mm.

## Claims

1. A valve (200) for a blow molding machine (100), the valve (200) comprising:

a housing (202) having an inlet (204) and an outlet (206);
a piston (208) movable inside the housing (202), and comprises:

an annular section (212);
an upper control chamber (214) positioned between an upper end of the annular section (212) and the housing (202), and a lower control chamber (216) positioned between a lower end of the annular section (212) and the housing (202), wherein the upper control chamber (214) and the lower control chamber (216) are operable to actuate the piston (208);
an upper control port (224) configured to enable pressurized fluid to enter or exit the upper control chamber (214);
a lower control port (226) configured to enable pressurized fluid to enter or exit the lower control chamber (216);
a pilot valve system (300) comprising a pilot valve (302, 340), the pilot valve operable to independently control the pressure in each of the upper control chamber (214) and the lower control chamber (216),

wherein fluid exhausting from the pilot valve (302,340) is passed through a restrictor (314, 316) to further control the pressure in the upper control chamber (214) and the lower control chamber (216), and wherein a first restrictor (314) helps control the flow of fluid exhausting from the upper control chamber (214) and a second restrictor (316) helps control the flow of fluid exhausting from the lower chamber (216).

2. The valve (200) of claim 1, wherein the pilot valve (302, 340) has a first position in which it provides pressurized fluid to the upper control chamber (214) while exhausting fluid from the lower control chamber (216), resulting in the closing of the main valve (200), and a second position in which it provides pressurized fluid to the lower control chamber (216) while exhausting fluid from the upper control chamber (214), resulting in the opening of the main valve (200).

3. The valve (200) of claim 1, wherein the pilot valve system (300) further comprises at least one fluid line (304, 306), at least one exhaust silencer (308, 312), and a pressurized fluid source (310).

4. The valve (200) of claim 3, wherein the pilot valve comprises openings that lead to any of upper control chamber (214), lower control chamber (216), or exhausts (308, 312) and are formed to be the narrowest point through which working fluid passes in the pilot valve (302, 340).

5. The valve (200) of claim 4, wherein the openings include a diameter in the range of 3.5 to 5 mm.

6. The valve (200) of claim 3, wherein the pilot valve (302, 340) is in fluid communication with the upper control port (224) via the fluid line (304), and with the lower control port (226) via the fluid line (306),

7. The valve (200) of claim 1, wherein the pilot valve (302, 340) is a 5/2 valve.

8. The valve (200) of claim 1, wherein the pilot valve (302, 340) is a solenoid valve.

9. The valve (200) of claim 1, wherein the pilot valve (302, 340) comprises a housing (342), a slide (344), a biasing element (346), and an actuating element (348).

10. The valve (200) of claim 9, wherein the slide (344) is operable to reciprocate inside the housing (342) to operate the pilot valve (302, 340).

11. The valve (200) of claim 9, wherein the slide (344) is pressure balanced.

12. The valve (200) of claim 9, wherein the slide (344) is fabricated from metal.

13. The valve (200) of claim 9, wherein the pilot valve (302, 340) is spring biased into the first position.

14. A method for actuating a valve (200) for a blow molding machine, the method including the steps of:

providing a housing (202) having an inlet (204), and an outlet (206);
providing a piston (208) movable inside the housing (202), the piston (208) comprising an annular section (212), and the valve (200) further comprising an upper control chamber (214) positioned between an upper end of the annular section (212) and the housing (202), and a lower control chamber (216) between a lower end of the annular section (212) and the housing (202);

providing an upper (224) and a lower control port (226) to enable pressurized fluid to enter or exit the upper (214) and the lower control chamber (216) respectively;

providing a pilot valve system (300) comprising an inlet valve (302, 340) operable to control the pressure in each of the upper control chamber (214) and the lower control chamber (216);

actuating the piston (208) independently of an inlet fluid pressure by means of the pilot valve (302, 340);

passing fluid exhausted from the pilot valve (302,340) through a restrictor (314, 316) to further control the pressure in the upper control chamber (214) and the lower control chamber (216), wherein a first restrictor (314) helps control the flow of fluid exhausting from the upper control chamber (214) and a second restrictor (316) helps control the flow of fluid exhausting from the lower chamber (216).

100

102

112a

Exh

112b

REC

112c

P2

P1

112d

104

110

112

108

106

**FIG. 1**

FIG. 2

FIG. 3

13

FIG. 4

Europäisches
Patentamt

European
Patent Office

Office européen
des brevets

# EUROPEAN SEARCH REPORT

**Application Number**

EP 18 18 8181

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FR 2 827 541 A1 (TECHNOPLAN ENGINEERING S A [CH]) 24 January 2003 (2003-01-24) <br> * page 1, paragraph 1 * <br> * page 4, paragraph 3 * <br> * page 9, paragraph 2 - page 10, paragraph 1; figure 2 * <br> ----- | 1-14 | INV. <br> B29C49/42 <br> B29C49/58 |
| A | WO 2009/010096 A1 (SEITZ EUGEN AG [CH]; RYMANN OTHMAR [CH]) 22 January 2009 (2009-01-22) <br> * page 5, paragraph 4 * <br> * page 7, paragraph 1 * <br> * page 15, paragraph 6 - page 19, paragraph 4; figure 2 * <br> ----- | 1-14 | |
| A | EP 2 402 143 A1 (SMI SPA [IT]) 4 January 2012 (2012-01-04) <br> * paragraphs [0001], [0045], [0055], [0057], [0061], [0056], [0066], [0067], [0069], [0077], [0080], [0082], [0088]; figure 5 * <br> ----- | 1-14 | TECHNICAL FIELDS SEARCHED (IPC) <br><br> B29C <br> F16K |

The present search report has been drawn up for all claims

| Place of search | Date of completion of the search | Examiner |
|---|---|---|
| Munich | 23 October 2018 | Ingelgård, Tomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 18 8181

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2018

| Patent document cited in search report | | Publication date | Patent family member(s) | | Publication date |
|---|---|---|---|---|---|
| FR 2827541 | A1 | 24-01-2003 | AT | 482816 T | 15-10-2010 |
| | | | BR | 0211211 A | 13-07-2004 |
| | | | CA | 2454599 A1 | 06-02-2003 |
| | | | CN | 1533326 A | 29-09-2004 |
| | | | EP | 1409227 A1 | 21-04-2004 |
| | | | FR | 2827541 A1 | 24-01-2003 |
| | | | MX | PA04000526 A | 04-05-2004 |
| | | | RU | 2291779 C2 | 20-01-2007 |
| | | | US | 2004173949 A1 | 09-09-2004 |
| | | | WO | 03009993 A1 | 06-02-2003 |
| WO 2009010096 | A1 | 22-01-2009 | AT | 495005 T | 15-01-2011 |
| | | | CN | 101743114 A | 16-06-2010 |
| | | | EP | 2167303 A1 | 31-03-2010 |
| | | | ES | 2358368 T3 | 10-05-2011 |
| | | | WO | 2009010096 A1 | 22-01-2009 |
| EP 2402143 | A1 | 04-01-2012 | CA | 2745115 A1 | 02-01-2012 |
| | | | EP | 2402143 A1 | 04-01-2012 |
| | | | ES | 2421396 T3 | 02-09-2013 |
| | | | IT | 1401108 B1 | 12-07-2013 |
| | | | US | 2012001370 A1 | 05-01-2012 |

EPO FORM P0459

For more details about this annex : see Official Journal of the European Patent Office, No. 12/82